# EUROPEAN PATENT SPECIFICATION

(11) **EP 1 886 179 B1**
(45) Date of publication and mention of the grant of the patent: **01.10.2014**
(21) Application number: 06756178.7
(22) Date of filing: 25.05.2006
(51) Int. Cl.: G02B 27/01, G09B 9/32

(54) **COMBINED HEAD UP DISPLAY**
KOMBINIERTE HEAD-UP-ANZEIGE
DISPOSITIF DE VISUALISATION TETE HAUTE COMBINE

(30) Priority: 30.05.2005 IL 16888505
(43) Date of publication of application: 13.02.2008
(73) Proprietor: ELBIT SYSTEMS LTD., 31053 Haifa (IL)
(72) Inventor: YOELI, Nahum, 26268 Kiryat Haim (IL); BELKIN, Nissan, 69345 Tel Aviv (IL)
(74) Representative: Petraz, Gilberto Luigi
(86) International application number: PCT/IL2006/000624
(87) International publication number: WO 2006/129307

(56) References cited:
- GB-A- 2 259 213
- US-A- 1 394 797
- US-A- 3 006 241
- US-A- 4 246 605
- US-A- 5 329 323
- PATENT ABSTRACTS OF JAPAN vol. 017, no. 529 (P-1618), 22 September 1993 (1993-09-22) -& JP 05 142982 A (MITSUBISHI HEAVY IND LTD), 11 June 1993 (1993-06-11)

## Description

### FIELD OF THE DISCLOSED TECHNIQUE

The disclosed technique relates to projection screens in general, and to systems and methods for demonstrating the operation of a head-up display (HUD) in a cockpit for an audience, in particular.

### BACKGROUND OF THE DISCLOSED TECHNIQUE

Systems and methods for displaying a projected image to an audience are known in the art. Such systems employ either a front projection screen or a rear projection screen to provide either a still or a video image for the audience. Head-up displays (HUD) are also known in the art. A HUD includes a projector to project an image of informative data, such as a symbol or a numeral, on to a glass screen located between a canopy of an aircraft and a pilot of the aircraft. In this manner, the pilot can obtain relevant information, such as the air speed, or a map, without having to look down to the gauges on the instrument panel. This HUD is usually in the general form of a rectangle a few inches (1 inch = 2.54 cm) on each side.

US Patent No. 6,870,670 B2 issued to Gehring et al., and entitled "Screens and Methods for Displaying Information", is directed to a system for displaying information to viewers, such as pedestrians, customers, an audience, spectators, and drivers. The system includes a projector, a rear projection screen, an optical adhesive, and a transparent viewable surface. The rear projection screen includes a plurality of refractive elements, a light transmitting substrate, a light absorbing layer, and a backing. The refractive elements and the light absorbing layer are coated on one side of the light transmitting substrate. The optical adhesive is coated on the opposite side of the light transmitting substrate, and the backing covers the optical adhesive during storage, to be peeled off before attaching the rear projection screen to the transparent viewable surface.

The transparent viewable surface can be a window of a shop. The projector is located behind the rear projection screen, in order to display the image to the viewers through the transparent viewable surface, temporarily and for a predetermined period of time. Thereafter, the rear projection screen can be detached from the transparent viewable surface. The system further includes a central controller, a plurality of projectors, and a mass storage. The central controller is connected to the mass storage and to the projectors via a network. The projectors are spread in different geographical locations. A user can direct the central controller to transmit data respective of selected images, to selected projectors.

US Patent No. 4,025,160 issued to Martinez and entitled "Dual Purpose Projection Screen", is directed to a projection screen for projecting an image to an audience at a wide viewing angle. The projection screen includes a plastic film having a front surface and a rear surface. The plastic film is translucent and milky white. Fine parallel random striations are formed on the rear surface, by the rotating action of a bristle brush, and a reflective metallic coating is applied to the parallel random striations. Light emitted by a projector toward the front surface, passes through the plastic film and is reflected from the reflective metallic coating in a lenticular manner. Due to the lenticular effect, the light is reflected in the horizontal plane at a greater angle relative to the central axis of the projector.

US Patent No. 4,962,420 issued to Judenich and entitled "Entertainment Video Information System Having a Multiplane Screen", is directed to a video information system for displaying a plurality of images to an audience. The video information system includes a plurality of cells and a plurality of projectors. Each cell is in form of either a front projection screen or a rear projection screen, having either a vertical axis or a horizontal axis. Each cell can rotate about the respective axis. Each of the projectors projects a different image on the respective cell.

US Patent No. 6,577,355 B1 issued to Yaniv and entitled "Switchable Transparent Screens for Image Projection System", is directed to a system for displaying a plurality of images to an audience. The system includes a projection screen and a plurality of projectors. The projection screen is made of a transparent material having a plurality of switchable portions. Each of the switchable portions can be switched between a transparent state and an opaque state, electrically or chemically. The projectors are located on either side of the projection screen. When a switchable portion is switched to an opaque state, the audience can view an image projected by the projector on the switchable portion.

US Patent No. 6,853,486 B2 issued to Cruz-Uribe et al., and entitled "Enhanced Contrast Projection Screen", is directed to a display system to enhance the contrast of an image displayed to an audience in low ambient light conditions. The display system includes a computer, a reflectance processor, a light engine, a variable-reflectivity projection screen, and an electrode controller. The variable-reflectivity projection screen includes a plurality of display elements and a bias region located between the display elements. Each display element includes one or more active pixel elements.

The reflectance processor is connected with the computer, the light engine, and with the electrode controller. The electrode controller is connected with the active pixel elements. The electrode controller alters the reflectivity state of each of the active pixel elements. The reflectance processor converts the image data which is used by the light engine to generate an image projected on the variable-reflectivity projection screen, to corresponding reflectance states of the respective active pixel elements. Regions of the image projected on the variable-reflectance projection screen which have high luminance, benefit from projection onto active pixel elements which exhibit a high reflectance. Regions of the image projected on the variable-reflectance projection screen which have low luminance, benefit from projection onto active pixel elements which exhibit a low reflectance.

Japanese Patent Publication No. JP 05-142982 to Maekawa Eiichi, entitled "Simulation video device", discloses a simulation video device comprising: a cockpit consisting of a seat where an operator sits, a first screen provided in front of the seat, a video display device which projects on the first screen a video image according to the operation of an operator, a second screen installed in front of the cockpit and covering the visual field from the cockpit, and a projector which projects a background image on the second screen. The background image projected on the second screen and the video image projected on the first screen are observed superposed on each other by the operator.

### SUMMARY OF THE DISCLOSED TECHNIQUE

It is an object of the disclosed technique to provide a novel method and system for demonstrating the operation of a HUD.

In accordance with the disclosed technique, there is thus provided a system, as defined in claim 1, for simulating to an audience a view from a cockpit of an aircraft, the cockpit including a head-up display. The system includes a concave panoramic projection screen, a plurality of panoramic projectors for projecting respective portions of a panoramic image on respective sections of the panoramic projection screen, a beam combiner located between the panoramic projection screen and the audience, and an auxiliary projector for projecting the auxiliary image toward the beam combiner. The panoramic image is viewed by an audience. The beam combiner produces a combined image of the panoramic image and the auxiliary image, to be viewed by the audience through the beam combiner from respective positions of the viewers, by transmitting at least part of the panoramic image toward the audience, and by reflecting the auxiliary image toward the audience, such that the auxiliary image is focused as being located on an image plane located at a distance of between 2-4 meters from the viewers so that the auxiliary image appears closer to the audience than the panoramic image. The panoramic image and the auxiliary image are temporally and spatially projected in synchrony.

In accordance with another embodiment of the disclosed technique, there is thus provided a method, as defined in claim 8, for simulating to an audience a view from a cockpit of an aircraft, the cockpit including a head-up display. The method includes the step of directing a plurality of panoramic projectors to project respective portions of a panoramic image on respective sections of a concave panoramic projection screen. The method further includes the step of directing an auxiliary projector to project an auxiliary image toward a beam combiner according to auxiliary image data, the beam combiner being located between the panoramic projection screen and the audience. The method further includes the step of producing a combined image of the panoramic image and the auxiliary image, to be viewed by the audience through the beam combiner from respective positions of the viewers, by transmitting at least part of the panoramic image toward the audience by the beam combiner, and by reflecting the auxiliary image toward the audience by the beam combiner, such that the auxiliary image is focused as being located on an image plane located at a distance of between 2-4 meters from the viewers so that the auxiliary image appears closer to the audience than the panoramic image. The panoramic image and the auxiliary image are temporally and spatially projected in synchrony.

### BRIEF DESCRIPTION OF THE DRAWINGS

The disclosed technique will be understood and appreciated more fully from the following detailed description taken in conjunction with the drawings in which:
Figure 1 is a schematic illustration of a system for displaying a panoramic image on a panoramic projection screen, and informative data on a beam combiner to an audience, constructed and operative in accordance with an embodiment of the disclosed technique;
Figure 2 is a schematic illustration of a side view of the system of Figure 1;
Figure 3 is schematic illustration of a top view of the system of Figure 1;
Figure 4 is a block diagram of the system of Figure 1;
Figure 5A is a schematic illustration of an auxiliary image reflected by the beam combiner of the system of Figure 1, toward an audience;
Figure 5B is a schematic illustration of another auxiliary image simulating a cockpit reflected by the beam combiner against a panoramic image, toward the audience;
Figure 5C is a schematic illustration of a further auxiliary image simulating a HUD displaying a map reflected toward the audience by the beam combiner against a panoramic image;
Figure 5D is a schematic illustration of another auxiliary image simulating a HUD displaying informative data reflected toward the audience by the beam combiner against a panoramic image; and
Figure 6 is a schematic illustration of a method for operating the system of Figure 1, operative according to another embodiment of the disclosed technique.

### DETAILED DESCRIPTION OF THE EMBODIMENTS

The disclosed technique overcomes the disadvantages of the prior art by projecting a panoramic image for an audience, on a large and distant panoramic projection screen, and by projecting informative data on a beam combiner located between the panoramic projection screen and the audience, such that the image of the informative data appears to the audience at a distance closer than that of the panoramic projection screen. A system according to the disclosed technique simulates the operation of an actual head-up display (HUD) of an aircraft during flight, thereby enabling the audience to view the informative data against a panoramic view of a cockpit of the aircraft, as if the audience was flying the aircraft.

The term "auxiliary image" herein below refers to a video image, such as a menu including a plurality of simulation options, an image of a cockpit (not shown) of an aircraft (not shown) as seen by a pilot (not shown) of the aircraft, informative data (e.g., a two-dimensional map, a three-dimensional map, flight data), and the like. Alternatively, the auxiliary image is a still image. The term "panoramic image" herein below refers to a video image simulating a view of outside scenery as seen by a pilot from the cockpit. Alternatively, the panoramic image is a still image.

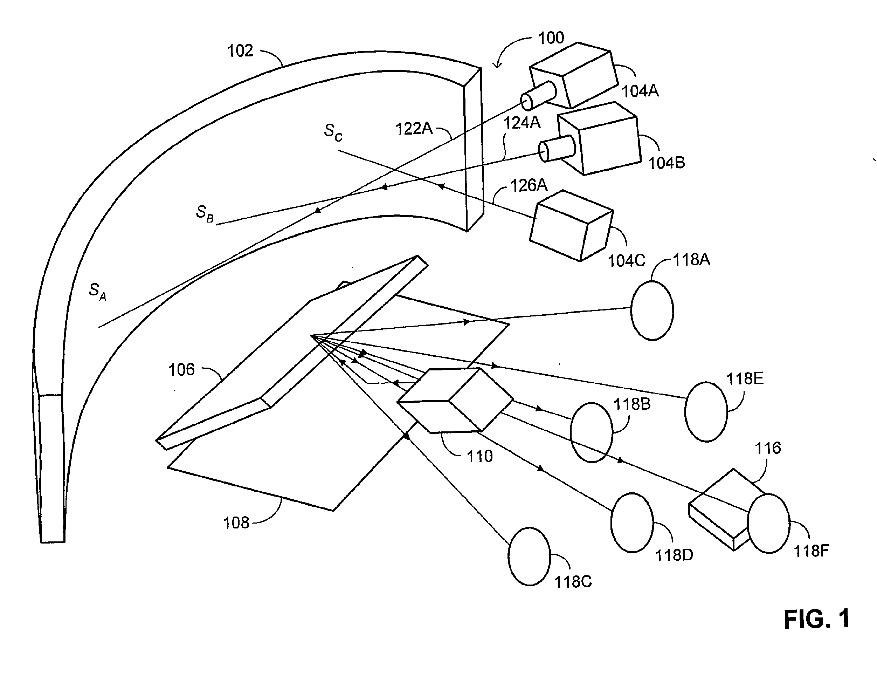

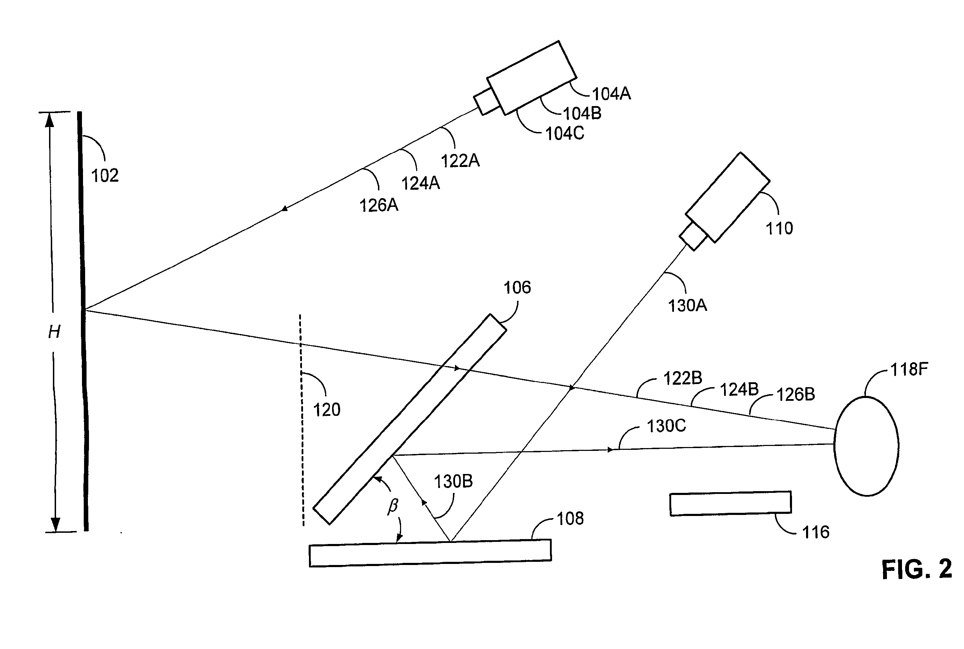

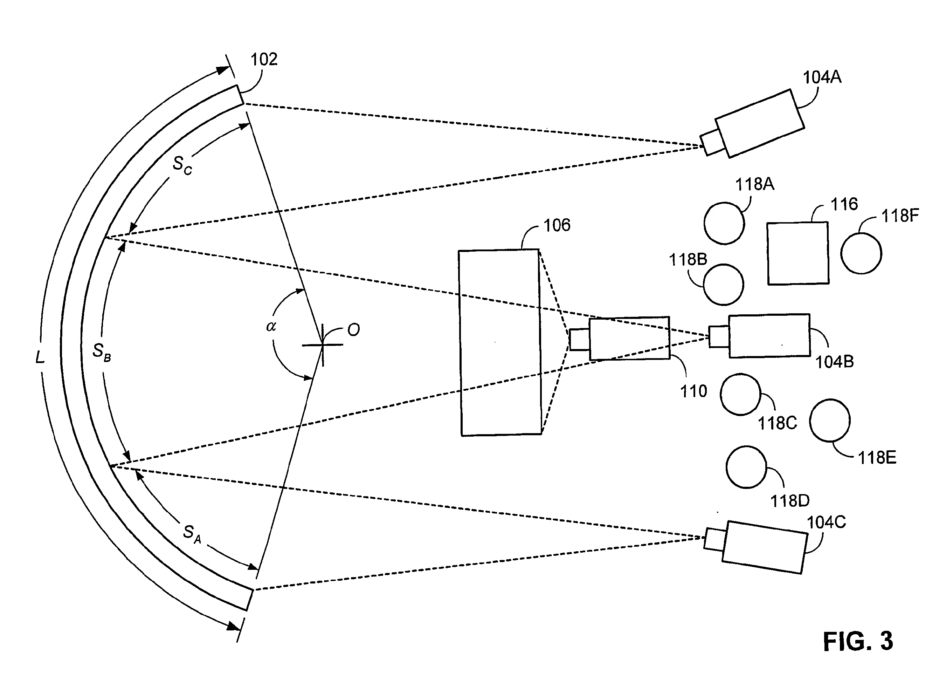

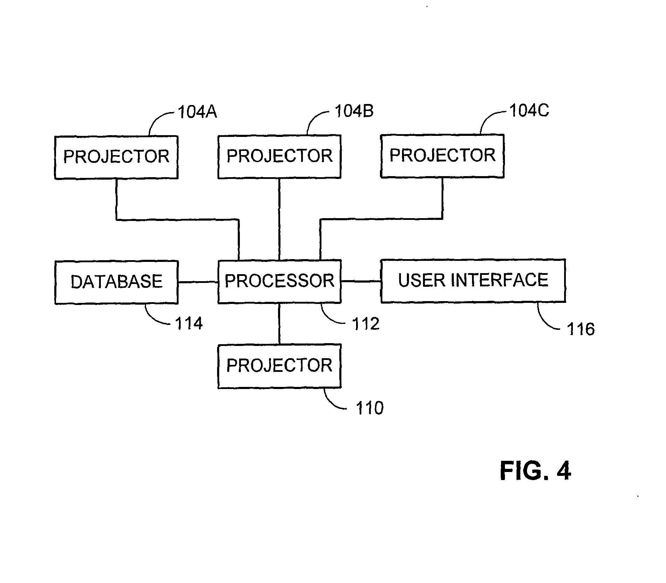

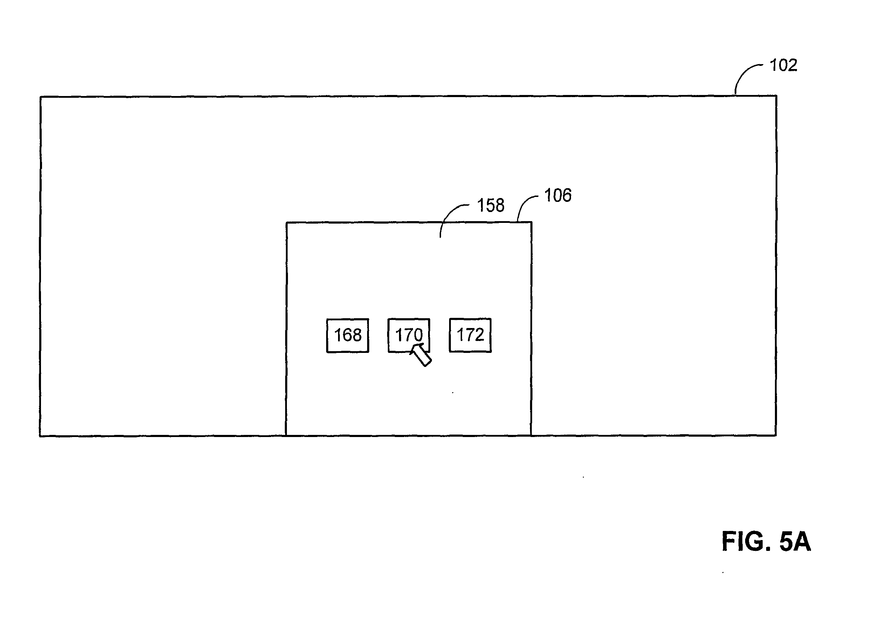

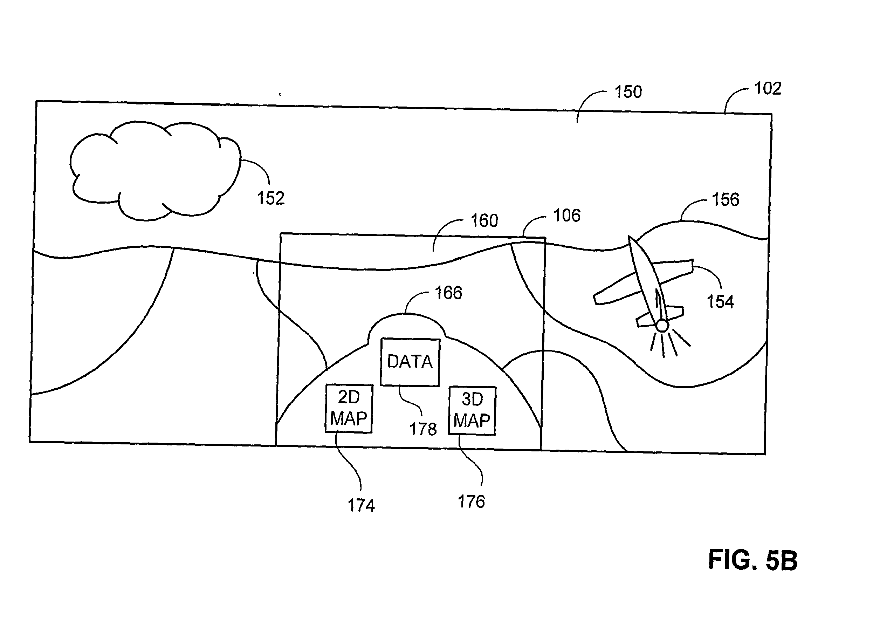

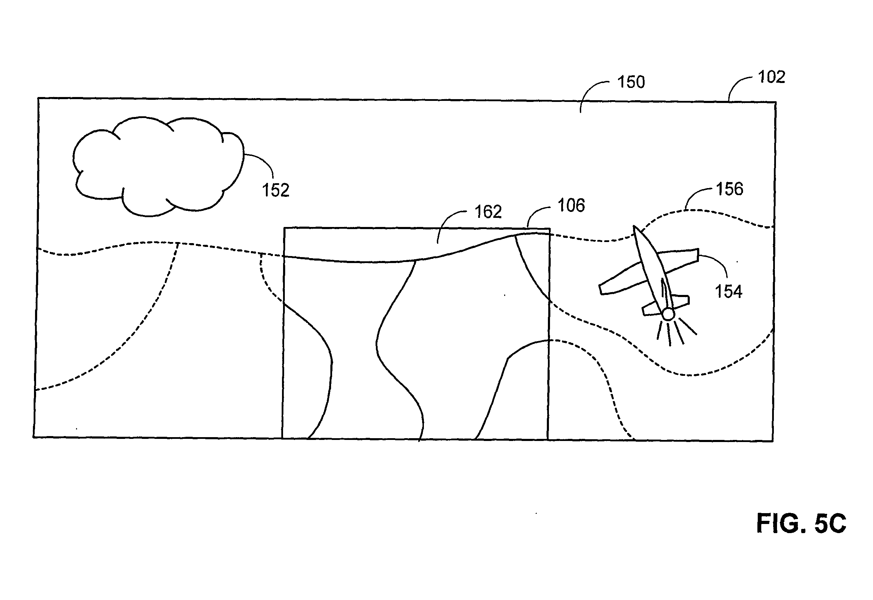

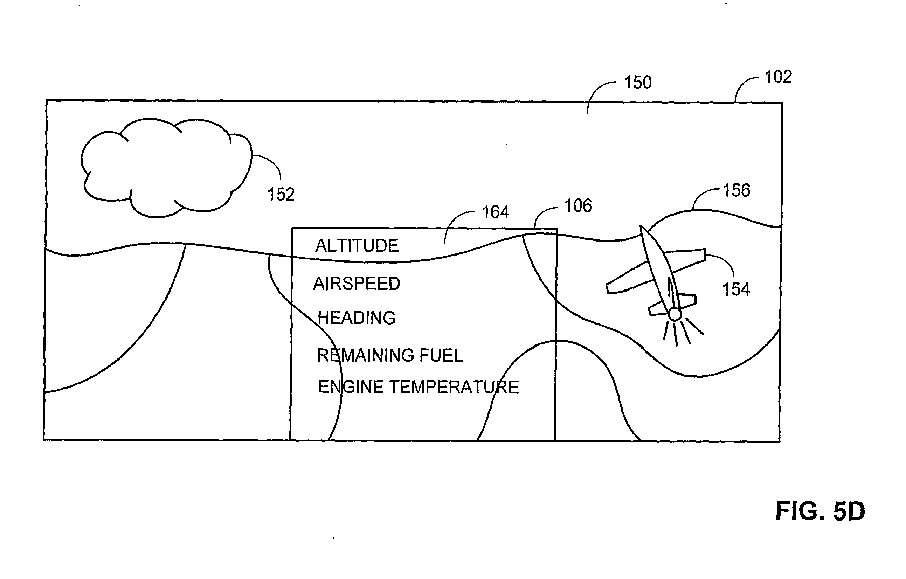

Reference is now made to Figures 1, 2, 3, 4, 5A, 5B, 5C and 5D. Figure 1 is a schematic illustration of a system, generally referenced 100, for displaying a panoramic image on a panoramic projection screen, and informative data on a beam combiner to an audience, constructed and operative in accordance with an embodiment of the disclosed technique. Figure 2 is a schematic illustration of a side view of the system of Figure 1. Figure 3 is schematic illustration of a top view of the system of Figure 1. Figure 4 is a block diagram of the system of Figure 1. Figure 5A is a schematic illustration of an auxiliary image reflected by the beam combiner of the system of Figure 1, toward an audience. Figure 5B is a schematic illustration of another auxiliary image simulating a cockpit reflected by the beam combiner against a panoramic image, toward the audience. Figure 5C is a schematic illustration of a further auxiliary image simulating a HUD displaying a map reflected toward the audience by the beam combiner against a panoramic image. Figure 5D is a schematic illustration of another auxiliary image simulating a HUD displaying informative data reflected toward the audience by the beam combiner against a panoramic image.

With reference to Figures 1 and 4, system 100 includes a panoramic projection screen 102, a plurality of panoramic projectors 104A, 104B, and 104C, a beam combiner 106, a reflector 108, an auxiliary projector 110, a processor 112, a database 114, and a user interface 116. Processor 112 is coupled with panoramic projectors 104A, 104B, and 104C, auxiliary projector 110, database 114, and with user interface 116, either with a wired link or by a wireless link. Beam combiner 106 is located between panoramic projection screen 102, and a plurality of viewers 118A, 118B, 118C, 118D, 118E (i.e., an audience), and an operator 118F. Panoramic projection screen 102 is relatively distant from the audience, for example 10m away, such that the panoramic image simulates the real scenery as viewed from the cockpit of an aircraft by the pilot. To enhance the panoramic effect, panoramic projection screen 102 is concave, such as cylindrical or spherical sector shaped. The relatively large dimensions of panoramic projection screen 102 provide for an image which is perceived by the audience to be substantially located an infinite distance away (i.e., panoramic projection screen 102 projects a panoramic image at infinity focus). It is noted that the proportions of the elements shown in Figures 1, 2, and 3 may be exaggerated and do not reflect actual sizes or distances of the various elements of system 100.

With reference to Figure 3, a cross section of panoramic projection screen 102 is in the form of an arc of a sector of a circle (not shown) having a center *O*. This sector subtends an angle *α*, where *α* can be for example between 100 and 140 degrees. A length L of this arc can be for example in the scale of 10m. With reference to Figure 2, a height H of panoramic projection screen 102 can be for example between 3m and 4m.

Beam combiner 106 can be either transparent or semitransparent and can be made of a transparent sheet with a reflective coating, a substantially flat sheet of glass, a polymer, and the like. Beam combiner 106 can be in the form of a rectangle, for example having a length and width of between 1 m and 2m. Beam combiner 106 is oriented at an inclination relative to the audience, e.g., at 45 degrees counterclockwise from the optical axis between beam combiner 106 and the audience, as best seen by angle *β* in Figure 2.

Reflector 108 can be for example, made of cloth or a polymer impregnated with reflective particles such as metal beads. Reflector 108 is located below beam combiner 106. auxiliary Projector 110 is located above both reflector 108 and beam combiner 106, such that auxiliary projector 110 would not block the view of panoramic image by the audience. In the example set forth in Figures 1, 2, and 3, panoramic projection screen 102 is a front projection screen. Hence, panoramic projectors 104A, 104B, and 104C, are located above and in front of panoramic projection screen 102. Alternatively, the panoramic projection screen can be a rear projection screen, in which case the panoramic projectors are located behind the panoramic projection screen.

Panoramic projectors 104A, 104B, and 104C, project different portions of a panoramic image 150 (Figures 5B, 5C, and 5D), represented by light beams 122A (Figures 1 and 2), 124A, and 126A, on sections *S_{A}* (Figure 3), *S_{B}*, and *S_{C}*, respectively, of panoramic projection screen 102. Panoramic image 150 includes an image 152 of clouds, an image 154 of an aircraft, and an image 156 of a landscape, which the pilot would see through the cockpit, and through a HUD (not shown) disposed in front of the pilot.

A method for producing a substantially seamless panoramic image of panoramic image 150 is described herein below. Panoramic projection screen 102 reflects light beams 122A, 124A, and 126A, as light beams 122B, 124B, and 126B, toward the audience, through beam combiner 106. The use of several projectors such as panoramic projectors 104A, 104B, and 104C is preferable with a relatively large and concave panoramic projection screen. It is possible to use a single panoramic projector for the panoramic projection screen, thus compromising quality and limiting the size, spread or curvature of the panoramic projection screen, and therefore reducing the reality-like experience provided by the panoramic image.

Auxiliary projector 110 projects an auxiliary image, such as auxiliary image 158 (Figure 5A), auxiliary image 160 (Figure 5B), auxiliary image 162 (Figure 5C), or auxiliary image 164 (Figure 5D), represented by a light beam 130A (Figure 2), on reflector 108. Reflector 108 reflects light beam 130A as a light beam 130B toward beam combiner 106, and beam combiner 106 reflects light beam 130B as a light beam 130C, toward the audience. Beam combiner 106 produces a combined image by combining light beams 122B, 124B, 126B, which are transmitted through beam combiner 106, with light beam 130C, which is reflected from beam combiner 106.

Hence, the audience can view some portions of panoramic image 150 directly, as reflected by panoramic projection screen 102, and other portions of panoramic image 150 indirectly, as transmitted through beam combiner 106. The audience can view each of auxiliary images 158, 160, 162, and 164 simultaneously, as reflected by beam combiner 106. Each of auxiliary images 158, 160, 162, and 164, is focused such that it appears to the audience as if it was located on an image plane 120. Image plane 120 is much closer to the audience than panoramic projection screen 102, thus providing an image resembling a closer object, for example the instrument panel in the cockpit as seen in Figure 5B. Image plane 120 can be located for example between 2m and 4m from the audience.

Alternatively, an appropriate optical assembly (not shown) such as in auxiliary projector 110, can also provide for a curved image surface or plane instead of image plane 120. For example, a cylindrical sector in conformity with the cylindrical sector shape of panoramic projection screen 102.

Panoramic image 150 is a video image of the external environment of the aircraft, as seen by the pilot through a canopy of the aircraft (e.g., images of other aircraft flying in the vicinity of the aircraft simulated by system 100, an image of the ground and objects thereon, atmospheric conditions, such as clouds, water droplets, lightning, and the like). Each of auxiliary images 158, 160, 162, and 164, is projected in synchrony with panoramic video image 150. For example, if auxiliary image 162 is a map, such as illustrated in Figure 5C, the map corresponds to the actual scenery shown by panoramic video image 150. If auxiliary image 164 is informative data, such as illustrated in Figure 5D, the informative data corresponds to the actual scenery shown by panoramic video image 150. If auxiliary image 160 is an image 166 of an instrument panel of a cockpit, such as illustrated in Figure 5B, the maps and informative data of the instruments correspond to the actual scenery shown by panoramic video image 150.

User interface 116 can be a visual user interface, acoustic user interface, tactile user interface, a combination thereof, and the like. Hence, user interface 116 can be a touch screen, a combination of a display and a pointing device, a combination of a display and a sound detector, and the like. For example, operator 118F can navigate through the menu in each of auxiliary images 158, 160, 162, and 164, via the sound detector of user interface 116.

Operator 118F has access to user interface 116. User interface 116 displays an image which can be also projected to the audience as an auxiliary image, such as auxiliary image 158 of Figure 5A.

With reference to Figure 5A, user interface 116 (Figure 1) and beam combiner 106 both display an auxiliary image 158. Auxiliary image 158 is an image of a menu of different options for operator 118F to select from. Auxiliary image 158 can include different options representing different aircraft models, for example, an option 168 representing an F16 fighter plane, an option 170 representing a Cobra helicopter, and an option 172 representing a Cessna aircraft 120. Operator 118F can navigate in the menu via a pointing device (not shown), by touching the display of user interface 116 (in case of a touch screen), and the like. When operator 118F selects, for example, option 170, processor 112 (Figure 4) retrieves data respective of an auxiliary image of a plurality of flight options from database 114. Database 114 stores data respective of a plurality of auxiliary images and a plurality of panoramic images, including the images per se, such as complete video images.

Processor 112 directs user interface 116 to display a particular auxiliary image, and auxiliary projector 110 to project the particular auxiliary image on beam combiner 106 via reflector 108, toward the audience. The auxiliary image can include for example an option representing a combat scenario, an option representing an assault scenario, an option representing an attack scenario, an option representing a training scenario, and an option representing a navigation scenario.

Processor 112 furthermore retrieves data respective of a panoramic video image 150, which corresponds to an external environment which the pilot of an aircraft, (e.g., an F-16) would see though the cockpit during a training flight. Processor 112 directs panoramic projectors 104A, 104B, and 104C, to project different portions of panoramic video image 150 on panoramic projection screen 102, thereby enabling the audience to view panoramic video image 150.

Auxiliary image 160 in Figure 5B is an image of the cockpit as the pilot would see (i.e., the instrument panel) while flying the aircraft. Auxiliary image 160 can include an image 174 of a two-dimensional map of the ground below the aircraft, an image 176 of a three-dimensional map of the ground below the aircraft, and an image 178 of flight data.

With reference to Figure 5D, when operator 118F selects to enlarge auxiliary image 164 to be displayed as a full screen, processor 112 directs auxiliary projector 110 to project auxiliary image 164 as a full auxiliary image on beam combiner 106, via reflector 108, toward the audience. Panoramic projectors 104A, 104B, and 104C continue to project panoramic video image 150 on panoramic projection screen 102. Auxiliary image 164 includes flight data respective of an F16 during flight training, such as altitude, airspeed, heading, remaining fuel, engine temperature, and the like, which the pilot would see on the HUD, in synchrony with panoramic video image 150.

The following is a description of a method for producing a substantially seamless image of panoramic video image 150, which is performed during calibration of system 100. Processor 112 directs panoramic projectors 104A, 104B, and 104C to project different portions of panoramic video image 150, on sections *S_{A}* (Figure 3), *S_{B},* and *S_{C}*, respectively, of panoramic projection screen 102. Due to the relative locations of panoramic projectors 104A, 104B, and 104C, there is generally a discrepancy between the images on sections *S_{A}, S_{B}*, and *S_{C}*, and these images are generally misaligned or out of scale relative to one another.

System 100 can further include an image detector (not shown) coupled with the processor. The image detector detects the images which panoramic projectors 104A, 104B, and 104C project on panoramic projection screen 102. Processor 112 determines the discrepancy between every adjacent pair of these images, by processing the detected images. Processor 112 modifies the images by substantially eliminating the discrepancies, and each of panoramic projectors 104A, 104B, and 104C projects the respective modified image on panoramic projection screen 102, thereby enabling the audience to obtain a substantially flawless and seamless view of panoramic video image 150.

For example, processor 112 determines that there is a gap (not shown) between an adjacent pair of images projected on sections *S_{A}* and *S_{B}*, and hence, processor 112 modifies these pair of images, such that this gap is substantially eliminated from the modified pair of images projected by panoramic projectors 104A and 104B, respectively. If the gap is substantially in the form of a rectangle, then processor 112 performs a translation between these pair of images. If the gap is substantially in the form of a trapezoid, then processor 112 performs a translation and a rotation between these pair of images. The gap can be either along a horizontal axis (not shown) of panoramic projection screen 102, along a vertical axis thereof (not shown), or inclined to the horizontal axis.

As a further example, processor 112 determines that the pair of adjacent images projected on panoramic projection screen 102 by panoramic projectors 104B and 104C, are of different scales, and hence processor 112 modifies these pair of images to substantially unify the absolute scales thereof. Once panoramic projectors 104A, 104B, and 104C project the respective modified images, the audience perceives panoramic video image 150 on panoramic projection screen 102, in a substantially flawless and seamless manner, as if viewing the environment around the aircraft from inside the cockpit of the aircraft.

Alternatively, processor 112 can calibrate system 100 according to a plurality of fiducials (i.e., landmarks) located at the edges of adjacent pairs of the images. A first calibration image (not shown) projected by panoramic projector 104B on section *S_{B}*, can include for example, a first fiducial (not shown) at an upper left corner thereof, and a second fiducial (not shown) at a lower left corner thereof. A second calibration image (not shown) projected by panoramic projector 104A on section *S_{A}*, can include a third fiducial (not shown) at an upper right corner thereof, and a fourth fiducial (not shown) at a lower right corner thereof. If there is a gap (not shown) between the first calibration image and the second calibration image, then according to an output of the image detector detecting the first calibration image and the second calibration image, processor 112 detects this gap, and determines that the first fiducial is not aligned with the third fiducial, and that the second fiducial is not aligned with the fourth fiducial.

Processor 112 controls the operation of panoramic projectors 104A and 104B, such that the first fiducial is aligned with the third fiducial, and the second fiducial is aligned with the fourth fiducial. In this manner, the images which panoramic projectors 104A and 104B project on panoramic projection screen 102 during a real-time operation of system 100, on sections *S_{A}* and *S_{B}*, respectively, are substantially of the same scale, and furthermore any gaps between the images are eliminated.

As a result of the alignment procedure of the fiducials, a left edge (not shown) of the first image and a right edge (not shown) of the second image can overlap. In this case, processor 112 can control the operation of panoramic projectors 104A and 104B, such that the left edge and the right edge are eliminated from images which panoramic projectors 104A and 104B project on panoramic projection screen 102, for example by cropping a portion of the images. In this manner, panoramic projectors 104A and 104B project the left image and the right image, such that substantially no overlap exists there between, and panoramic video image 150 is substantially seamless.

Auxiliary projector 110 projects an auxiliary image, such as auxiliary image 162 (Figure 5C), which should also spatially conform to panoramic video image 150. If auxiliary image 162 includes a two-dimensional map such as auxiliary image 162 (Figure 5C), then in addition to temporal synchronization of auxiliary image 162 with panoramic video image 150, the spatial synchrony thereof should also be provided. The spatial synchrony can optionally be performed by methods analogous to those described above with reference to the production of a substantially seamless image of panoramic video image 150.

Alternatively, auxiliary projector 110 can be located below beam combiner 106. In this case, auxiliary projector 110 projects the auxiliary image on beam combiner 106, and beam combiner 106 reflects the auxiliary image toward the audience. Thus, the reflector can be eliminated from the system. It is noted that the beam combiner can be oriented at an angle of, for example, 45 degrees clockwise, with respect to an optical axis between the panoramic projection screen and the audience. In this case, the auxiliary projector is located directly above the beam combiner, the reflector can be eliminated from the system, and the beam combiner reflects the auxiliary image directly toward the audience.

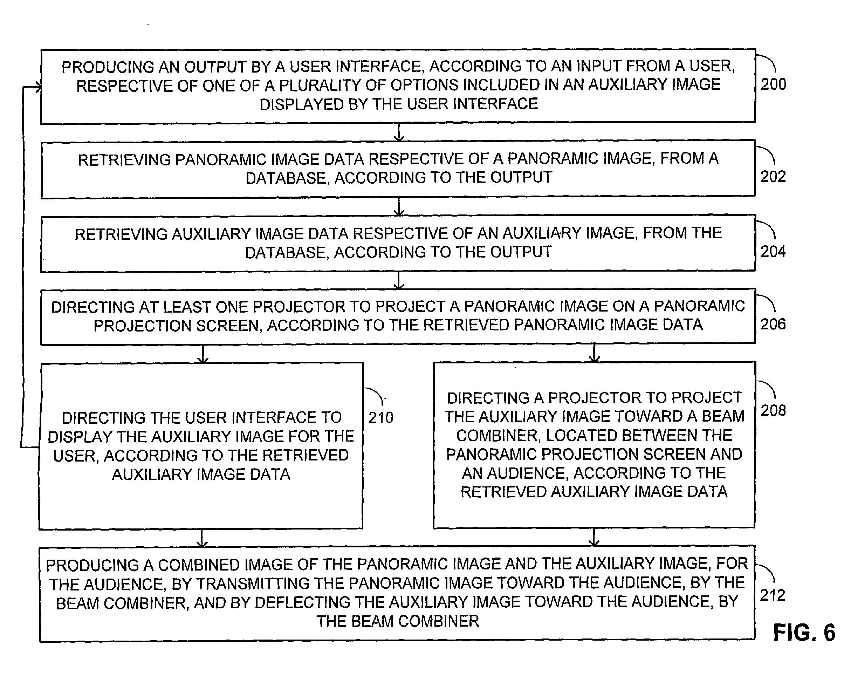

Reference is now made to Figure 6, which is a schematic illustration of a method for operating the system of Figure 1, operative according to another embodiment of the disclosed technique. In procedure 200, an output is produced by a user interface, according to an input from a user, respective of one of a plurality of options included in an auxiliary image displayed by the user interface. With reference to Figures 1, 4, and 5B, operator 118F selects option 174 among options 174, 176, and 178, in auxiliary image 160 displayed on user interface 116. User interface 116 produces an output according to this selection by operator 118F, and sends this output to processor 112.

In procedure 202, panoramic image data respective of a panoramic image is retrieved from a database, according to the output. With reference to Figures 4 and 5C, processor 112 retrieves panoramic image data respective of panoramic video image 150, according to the selection of option 174 by operator 118F in procedure 200.

In procedure 204, auxiliary image data respective of an auxiliary image is retrieved from the database, according to the output. With reference to Figures 4, 5B, and 5C, processor 112 retrieves auxiliary image data respective of auxiliary image 162, according to the selection of option 174 by operator 118F in procedure 200.

In procedure 206, at least one panoramic projector is directed to project a panoramic image on a panoramic projection screen, according to the retrieved panoramic image data. With reference to Figures 1, 4, and 5C, processor 112 directs panoramic projectors 104A, 104B, and 104C, to project panoramic video image 150, on panoramic projection screen 102, according to the panoramic image data which processor 112 retrieved from database 114, in procedure 202.

In procedure 208, an auxiliary projector is directed to project the auxiliary image toward a beam combiner, located between the panoramic projection screen and an audience, according to the retrieved auxiliary image data. With reference to Figures 1, 4, and 5C, processor 112 directs auxiliary projector 110 to project auxiliary image 162 on beam combiner 106, according to the auxiliary image data which processor 112 retrieved from database 114 in procedure 204. Beam combiner 106 is located between panoramic projection screen 102 and the audience (viewers 118A, 118B, 118C, 118D, 118E, and operator 118F).

In procedure 210, the user interface is directed to display the auxiliary image for the user, according to the retrieved auxiliary image data. With reference to Figures 1, 4, and 5C, processor 112 directs user interface 116 to display auxiliary image 162, according to the auxiliary image data which processor 112 retrieved from database 114 in procedure 204, for operator 118F. It is noted that procedures 208 and 210 are performed simultaneously.

In procedure 212, a combined image of the panoramic image and the auxiliary image is produced for the audience, by transmitting the panoramic image toward the audience, by the beam combiner, and by deflecting the auxiliary image toward the audience, by the beam combiner. Deflecting by the beam combiner can include reflecting or refracting the auxiliary image toward the audience. With reference to Figures 1, and 5C, beam combiner 106 produces a combined image for viewers 118A, 118B, 118C, 118D, 118E, and operator 118F. Beam combiner 106 produces this combined image by transmitting panoramic video image 150 there through, and by reflecting auxiliary image 162. It is noted that following procedure 210, the method can return back to procedure 200, for the user to select another option in the auxiliary image displayed in procedures 208 and 210.

It will be appreciated by persons skilled in the art that the disclosed technique is not limited to what has been particularly shown and described hereinabove. Rather the scope of the disclosed technique is defined only by the claims, which follow.

## Claims

1. System for simulating, to an audience including a plurality of viewers (118A, 118B, 118C, 118D, 118E), a view from a cockpit of an aircraft, the cockpit including a head-up display, the system comprising:
a concave panoramic projection screen (102) positioned at a distance of at least 10 meters from the audience;
a plurality of panoramic projectors (104A, 104B, 104C) for projecting on respective sections (S_{A}, S_{B}, S_{C}) of said panoramic projection screen (102) at least one respective portion of a panoramic image (150), said panoramic image (150) simulating a view of outside scenery as seen by a pilot from said cockpit, said panoramic image being viewed by said audience;
a single beam combiner (106), having a respective length and width of at least between 1 meter and 2 meters, said single beam combiner (106) being located between said concave panoramic projection screen (102) and said audience;
an auxiliary projector (110) for projecting an auxiliary image (158, 160, 162, 164) toward said beam combiner (106) for simulating the display on said head-up display, said beam combiner (106) producing a combined image of said panoramic image (150) and said auxiliary image (158, 160, 162, 164), to be viewed by said audience through said beam combiner (106) from respective positions of said viewers (118A, 118B, 118C, 118D, 118E), by transmitting at least part of said panoramic image (150) toward said audience (118A, 118B, 118C, 118D, 118E), and reflecting said auxiliary image (158, 160, 162, 164) toward said audience (118A, 118B, 118C, 118D, 118E), such that said auxiliary image (158, 160, 162, 164) is focused as being located on an image plane (120) located at a distance of between 2 meters and 4 meters from said viewers so that said auxiliary image (158, 160, 162, 164) appears closer to said audience (118A, 118B, 118C, 118D, 118E) than said panoramic image (150);
a database (114) for storing panoramic image data respective of said panoramic image (150), and auxiliary image data respective of said auxiliary image (158, 160, 162, 164);
a user interface (116) for displaying said auxiliary image (158, 160, 162, 164) to a user operator (118F) among said audience (118A, 118B, 118C, 118D, 118E), said user interface (116) being situated remotely from said beam combiner (106), said user interface (116) producing an output according to an input from said user operator (118F), respective of one of a plurality of options (168, 170, 172) included in said auxiliary image (158, 160, 162, 164); and
a processor (112) coupled with said panoramic projectors (104A, 104B, 104C), said auxiliary projector (110), said database (114), and with said user interface (116), said processor (112) retrieving said panoramic image data from said database (114) according to said output, said processor (112) retrieving said auxiliary image data according to said output, said processor (112) directing said panoramic projectors (104A, 104B, 104C) to project said panoramic image (150) on said panoramic projection screen (102) according to said panoramic image data, said processor (112) directing said auxiliary projector (110) to project said auxiliary image (158, 160, 162, 164) on said beam combiner (106) according to said auxiliary image data, wherein said panoramic image (150) and said auxiliary image (158, 160, 162, 164) are temporally and spatially projected in synchrony.

2. The system according to claim 1, further comprising a reflector (108) located below said beam combiner (106),
wherein said auxiliary projector (110) is located above said reflector (108) and said beam combiner (106),
wherein said auxiliary projector (110) projects said auxiliary image (158, 160, 162, 164) on said reflector (108),
wherein said reflector (108) reflects said auxiliary image (158, 160, 162, 164) toward said beam combiner (106), and
wherein said single beam combiner (106) is inclined at 45 degrees counterclockwise from the optical axis between said beam combiner (106) and the audience.

3. The system according to claim 1, wherein said beam combiner (106) is selected from the list consisting of:
semitransparent glass plate;
semitransparent plastic plate;
transparent glass plate; and
transparent plastic plate.

4. The system according to claim 1, wherein said auxiliary image (158, 160, 162, 164) is selected from the list consisting of:
menu;
cockpit of an aircraft; and
informative data.

5. The system according to claim 1, wherein at least one of said panoramic image (150) and said auxiliary image (158, 160, 162, 164) is selected from the list consisting of:
still; and
video.

6. The system according to claim 1, wherein each of said panoramic images is substantially seamless.

7. The system according to claim 1, wherein said user interface (116) is selected from the list consisting of:
visual;
acoustic; and
tactile.

8. Method for simulating, to an audience including a plurality of viewers (118A, 118B, 118C, 118D, 118E), a view from a cockpit of an aircraft, the cockpit including a head-up display, the method **characterized by** the steps of:
producing an output, according to an option selected by a user operator (118F) among a plurality of options (168, 170, 172) on a user interface (116);
retrieving panoramic image data and auxiliary image data from a database (114) according to said output;
directing a plurality of panoramic projectors (104A, 104B, 104C) to project at least one respective portion of a panoramic image (150) on respective sections of a concave panoramic projection screen (102) positioned at a distance of at least 10 meters from the audience, according to said panoramic image data;
directing an auxiliary projector (110) to project an auxiliary image (158, 160, 162, 164) toward a single beam combiner (106) according to said auxiliary image data, said beam combiner (106) having a respective length and width of between 1 meter and 2 meters, said beam combiner (106) being located between said concave panoramic projection screen (102) and said audience (118A, 118B, 118C, 118D, 118E), said beam combiner (106) situated remotely from said user interface (116); and
producing a combined image of said panoramic image (150) and said auxiliary image (158, 160, 162, 164), to be viewed by said audience (118A, 118B, 118C, 118D, 118E) through said beam combiner (106) from respective positions of said viewers (118A, 118B, 118C, 118D, 118E), by transmitting at least part of said panoramic image (150) toward said audience (118A, 118B, 118C, 118D, 118E), by said beam combiner (106), and reflecting said auxiliary image (158, 160, 162, 164) toward said audience (118A, 118B, 118C, 118D, 118E), by said beam combiner (106), such that said auxiliary image (158, 160, 162, 164) is focused as being located on an image plane (120) located at a distance of between 2 meters and 4 meters from said viewers so that said auxiliary image (158, 160, 162, 164) appears closer to said audience (118A, 118B, 118C, 118D, 118E) than said panoramic image (150), wherein said panoramic image (150) and said auxiliary image (158, 160, 162, 164) are temporally and spatially projected in synchrony.

9. The method according to claim 8, wherein said step of directing said auxiliary projector (110) comprises:
directing said auxiliary projector (110) to project said auxiliary image (158, 160, 162, 164) toward a reflector (108) located below said beam combiner (106); and
reflecting said auxiliary image (158, 160, 162, 164) by said reflector (108) toward said beam combiner (106);
wherein said single beam combiner (106) is inclined at 45 degrees counterclockwise from the optical axis between said beam combiner (106) and the audience.

## Patentansprüche

1. System zum Simulieren, für ein Publikum, das eine Vielzahl von Zuschauern (118A, 118B, 118C, 118D, 118E) umfasst, einer Aussicht aus einem Cockpit eines Flugzeugs, wobei das Cockpit ein Head-up-Display umfasst, wobei das System Folgendes umfasst:
eine konkave Panoramabildwand (102), die in einem Abstand von mindestens 10 Metern vom Publikum positioniert ist;
eine Vielzahl von Panoramaprojektoren (104A, 104B, 104C) zum Projizieren auf entsprechenden Abschnitten (S_{A}, S_{B}, S_{C}) der genannten Panoramabildwand (102) mindestens eines entsprechenden Abschnitts eines Panoramabildes (150), wobei das Panoramabild (150) eine Aussicht eines äußeren Landschaftsbildes simuliert, so wie ein Pilot es aus dem genannten Cockpit sieht, wobei das genannte Panoramabild vom genannten Publikum betrachtet wird;
einen einzelnen Strahlenkombinator (106), der eine entsprechende Länge und Breite von mindestens zwischen 1 Meter und 2 Metern aufweist, wobei der genannte einzelne Strahlenkombinator (106) zwischen der genannten konkaven Panoramabildwand (102) und dem genannten Publikum gelegen ist;
einen Hilfsprojektor (110) zum Projizieren eines Hilfsbildes (158, 160, 162, 164) in Richtung auf den genannten Strahlenkombinator (106) zum Simulieren der Anzeige an dem genannten Head-up-Display, wobei der genannte Strahlenkombinator (106) ein kombiniertes Bild des genannten Panoramabildes (150) und des genannten Hilfsbildes (158, 160, 162, 164) erzeugt, das vom genannten Publikum durch den genannten Strahlenkombinator (106) aus entsprechenden Positionen der genannten Zuschauer (118A, 118B, 118C, 118D, 118E) betrachtet werden soll, durch Senden mindestens eines Teils des genannten Panoramabildes (150) in Richtung auf das genannte Publikum (118A, 118B, 118C, 118D, 118E) und durch Reflektieren des genannten Hilfsbildes (158, 160, 162, 164) in Richtung auf das genannte Publikum (118A, 118B, 118C, 118D, 118E), so dass das genannte Hilfsbild (158, 160, 162, 164) als auf einer Bildebene (120) gelegen fokussiert ist, die in einem Abstand von zwischen 2 Metern und 4 Metern von den genannten Zuschauern gelegen ist, so dass das genannte Hilfsbild (158, 160, 162, 164) dem genannten Publikum (118A, 118B, 118C, 118D, 118E) näher als das genannte Panoramabild (150) erscheint;
eine Datenbank (114) zum Speichern von Panoramabilddaten bezüglich des genannten Panoramabildes (150) und von Hilfsbilddaten bezüglich des genannten Hilfsbildes (158, 160, 162, 164);
eine Benutzerschnittstelle (116) zum Anzeigen des genannten Hilfsbildes (158, 160, 162, 164) an einen Benutzerbediener (118F) unter dem genannten Publikum (118A, 118B, 118C, 118D, 118E), wobei die genannte Benutzerschnittstelle (116) von dem genannten Strahlenkombinator (106) entfernt gelegen ist, wobei die genannte Benutzerschnittstelle (116) eine Ausgabe gemäß einer Eingabe vom genannten Benutzerbediener (118F) bezüglich einer aus einer Vielzahl von Optionen (168, 170, 172) erzeugt, die in dem genannten Hilfsbild (158, 160, 162, 164) enthalten sind; und
einen Prozessor (112) gekoppelt mit den genannten Panoramaprojektoren (104A, 104B, 104C), dem genannten Hilfsprojektor (110), der genannten Datenbank (114) und mit der genannten Benutzerschnittstelle (116), wobei der genannte Prozessor (112) die genannten Panoramabilddaten von der genannten Datenbank (114) gemäß der genannten Ausgabe abruft, der genannte Prozessor (112) die genannten Hilfsbilddaten gemäß der genannten Ausgabe abruft, der genannte Prozessor (112) die genannten Panoramaprojektoren (104A, 104B, 104C) zum Projizieren des genannten Panoramabildes (150) auf der genannten Panoramabildwand (102) gemäß den genannten Panoramabilddaten steuert, der genannte Prozessor (112) den genannten Hilfsprojektor (110) zum Projizieren des genannten Hilfsbildes (158, 160, 162, 164) am genannten Strahlenkombinator (106) gemäß den genannten Hilfsbilddaten steuert, worin das genannte Panoramabild (150) und das genannte Hilfsbild (158, 160, 162, 164) zeitlich und räumlich synchron projiziert werden.

2. System nach Anspruch 1, ferner umfassend einen Reflektor (108), der unter dem genannten Strahlenkombinator (106) gelegen ist,
worin der genannte Hilfsprojektor (110) über dem genannten Reflektor (108) und dem genannten Strahlenkombinator (106) gelegen ist,
worin der genannte Hilfsprojektor (110) das genannte Hilfsbild (158, 160, 162, 164) auf dem genannten Reflektor (108) projiziert,
worin der genannte Reflektor (108) das genannte Hilfsbild (158, 160, 162, 164) in Richtung auf den genannten Strahlenkombinator (106) reflektiert, und
worin der genannte einzelne Strahlenkombinator (106) 45 Grad gegen den Uhrzeigersinn von der optischen Achse zwischen dem genannten Strahlenkombinator (106) und dem Publikum geneigt ist.

3. System nach Anspruch 1, worin der genannte Strahlenkombinator (106) aus einer Liste gewählt ist, die aus Folgendem besteht:
halbtransparenter Glasplatte;
halbtransparenter Kunststoffplatte;
transparenter Glasplatte; und
transparenter Kunststoffplatte.

4. System nach Anspruch 1, worin das genannte Hilfsbild (158, 160, 162, 164) aus einer Liste gewählt ist, die aus Folgendem besteht:
Menü;
Cockpit eines Flugzeugs; und
informativen Daten.

5. System nach Anspruch 1, worin zumindest eines von dem genannten Panoramabild (150) und vom genannten Hilfsbild (158, 160, 162, 164) aus einer Liste gewählt ist, die aus Folgendem besteht:
Standbild; und
Video.

6. System nach Anspruch 1, worin jedes der genannten Panoramabilder im Wesentlichen nahtlos ist.

7. System nach Anspruch 1, worin die genannte Benutzerschnittstelle (116) aus einer Liste gewählt ist, die aus Folgendem besteht:
visuell;
akustisch; und
taktil.

8. Verfahren zum Simulieren, für ein Publikum, das eine Vielzahl von Zuschauern (118A, 118B, 118C, 118D, 118E) umfasst, einer Aussicht aus einem Cockpit eines Flugzeugs, wobei das Cockpit ein Head-up-Display umfasst, wobei das Verfahren durch folgende Schritte gekennzeichnet ist:
Erzeugen einer Ausgabe, gemäß einer Option, ausgewählt von einem Benutzerbediener (118F) unter einer Vielzahl von Optionen (168, 170, 172) an einer Benutzerschnittstelle (116);
Abrufen von Panoramabilddaten und Hilfsbilddaten aus einer Datenbank (114) gemäß der genannten Ausgabe;
Steuern einer Vielzahl von Panoramaprojektoren (104A, 104B, 104C) zum Projizieren zumindest eines entsprechenden Abschnitts eines Panoramabildes (150) auf entsprechenden Abschnitten einer konkaven Panoramabildwand (102), die in einem Abstand von mindestens 10 Metern vom Publikum positioniert ist, gemäß den genannten Panoramabilddaten;
Steuern eines Hilfsprojektors (110) zum Projizieren eines Hilfsbildes (158, 160, 162, 164) in Richtung auf einen einzelnen Strahlenkombinator (106) gemäß den genannten Hilfsbilddaten, wobei der genannte Strahlenkombinator (106) eine entsprechende Länge und Breite von zwischen 1 Meter und 2 Metern aufweist, wobei der genannte Strahlenkombinator (106) zwischen der genannten konkaven Panoramabildwand (102) und dem genannten Publikum (118A, 118B, 118C, 118D, 118E) gelegen ist, wobei der genannte Strahlenkombinator (106) von der genannten Benutzerschnittstelle (116) entfernt gelegen ist; und
Erzeugen eines kombinierten Bildes des genannten Panoramabildes (150) und des genannten Hilfsbildes (158, 160, 162, 164), das vom genannten Publikum (118A, 118B, 118C, 118D, 118E) aus entsprechenden Positionen der genannten Zuschauer (118A, 118B, 118C, 118D, 118E) betrachtet werden soll, durch Senden mindestens eines Teils des genannten Panoramabildes (150) in Richtung auf das genannte Publikum (118A, 118B, 118C, 118D, 118E), mittels des genannten Strahlenkombinators (106), und durch Reflektieren des genannten Hilfsbildes (158, 160, 162, 164) in Richtung auf das genannte Publikum (118A, 118B, 118C, 118D, 118E), mittels des genannten Strahlenkombinators (106), so dass das genannte Hilfsbild (158, 160, 162, 164) als auf einer Bildebene (120) gelegen fokussiert ist, die in einem Abstand von zwischen 2 Metern und 4 Metern von den genannten Zuschauern gelegen ist, so dass das genannte Hilfsbild (158, 160, 162, 164) dem genannten Publikum (118A, 118B, 118C, 118D, 118E) näher als das genannte Panoramabild (150) erscheint, worin das genannte Panoramabild (150) und das genannte Hilfsbild (158, 160, 162, 164) zeitlich und räumlich synchron projiziert werden.

9. Verfahren nach Anspruch 8, worin der genannte Schritt des Steuerns des genannten Hilfsprojektors (110) Folgendes umfasst:
Steuern des genannten Hilfsprojektors (110) zum Projizieren des genannten Hilfsbildes (158, 160, 162, 164) in Richtung auf einen Reflektor (108), der unter dem genannten Strahlenkombinator (106) gelegen ist; und
Reflektieren des genannten Hilfsbildes (158, 160, 162, 164) mittels des genannten Reflektors (108) in Richtung auf den genannten Strahlenkombinator (106);
worin der genannte einzelne Strahlenkombinator (106) 45 Grad gegen den Uhrzeigersinn von der optischen Achse zwischen dem genannten Strahlenkombinator (106) und dem Publikum geneigt ist.

## Revendications

1. Système pour simuler, devant une audience comprenant une pluralité de spectateurs (118A, 118B, 118C, 118D, 118E), une vue depuis la cabine de pilotage d'un avion, la cabine de pilotage comportant un viseur tête haute, le système comprenant:
un écran de projection panoramique concave (102) positionné à une distance d'au moins 10 mètres de l'audience;
une pluralité de projecteurs panoramiques (104A, 104B, 104C) pour projeter sur de respectives sections dudit écran de projection panoramique (102) au moins une respective portion d'une image panoramique (150), ladite image panoramique (150) simulant une vue d'un paysage extérieur tel qu'il est vu depuis ladite cabine de pilotage, ladite image panoramique étant regardée par ladite audience;
un combinateur de faisceau unique (106), ayant respectivement une longueur et une largeur entre 1 mètre et 2 mètres, ledit combinateur de faisceau unique (106) étant situé entre ledit écran de projection panoramique concave (102) et ladite audience;
un projecteur auxiliaire (110) pour projeter une image auxiliaire (158, 160, 162, 164) vers ledit combinateur de faisceau (106) pour simuler l'affichage sur ledit viseur tête haute, ledit combinateur de faisceau (106) formant une image combinée de ladite image panoramique (150) et de ladite image auxiliaire (158, 160, 162, 164), destinée à être vue par ladite audience à travers ledit combinateur de faisceau (106) depuis les respectives positions desdits spectateurs (118A, 118B, 118C, 118D, 118E), par la transmission d'au moins une partie de ladite image panoramique (150) vers ladite audience (118A, 118B, 118C, 118D, 118E), et la réflexion de ladite image auxiliaire (158, 160, 162, 164) vers ladite audience (118A, 118B, 118C, 118D, 118E), de manière que ladite image auxiliaire (158, 160, 162, 164) soit focalisée comme si elle était située sur un plan d'image (120) situé à une distance comprise entre 2 mètres et 4 mètres desdits spectateurs de manière que ladite image auxiliaire (158, 169, 162, 164) paraisse plus proche à ladite audience (118A, 118B, 118C, 118D, 118E) que ladite image panoramique (150);
une base de données (114) pour la mémorisation des données d'image panoramique de ladite image panoramique (150), et des données d'image auxiliaire de ladite image auxiliaire (158, 160, 162, 164);
une interface utilisateur (116) pour afficher ladite image auxiliaire (158, 160, 162, 164) à un utilisateur-opérateur (118F) parmi ladite audience (118A, 118B, 118C, 118D, 118E), ladite interface utilisateur (116) étant située à distance dudit combinateur de faisceau (106), ladite interface utilisateur (116) fournissant une sortie, en réponse à une entrée dudit utilisateur-opérateur (118F), relative à l'une d'une pluralité d'options (168, 170, 172) prévues dans ladite image auxiliaire (158, 160, 162, 164);
un processeur (112) couplé auxdits projecteurs panoramiques (104A, 104B, 104C), audit projecteur auxiliaire (110), à ladite base de données (114), et à ladite interface utilisateur (116), ledit processeur (112) extrayant lesdites donnés d'image panoramique de ladite base de données (114), selon ladite sortie, ledit processeur (112) dirigeant lesdits projecteurs panoramiques (104A, 104B, 104C) pour projeter ladite image panoramique (150) sur ledit écran de projection panoramique (102), selon lesdites données d'image panoramique, ledit projecteur (112) dirigeant ledit projecteur auxiliaire (110) pour projeter ladite image auxiliaire (158, 160, 162, 164) sur ledit combinateur de faisceau (106), selon lesdites données d'image auxiliaire, dans lequel ladite image panoramique (150) et ladite image auxiliaire (158, 160, 162, 164) sont projetées en synchronisme de temps-espace.

2. Système selon la revendication 1, comprenant par ailleurs un réflecteur (108) situé au-dessous dudit combinateur de faisceau (106),
dans lequel ledit projecteur auxiliaire (110) est situé au-dessus dudit réflecteur (108) et dudit combinateur de faisceau (106),
dans lequel ledit projecteur auxiliaire (110) projette ladite image auxiliaire (158, 160, 162, 164) sur ledit réflecteur (108),
dans lequel ledit réflecteur auxiliaire (108) reflète ladite image auxiliaire (158, 160, 162, 164) vers ledit combinateur de faisceau (106), et
dans lequel ledit combinateur de faisceau unique (106) est incliné de 45 degrés dans le sens anti-horaire par rapport à l'axe optique entre ledit combinateur de faisceau (106) et l'audience.

3. Système selon la revendication 1, dans lequel ledit combinateur de faisceau (106) est choisi dans le groupe constitué par:
une plaque de verre semi-transparente;
une plaque de plastique semi-transparente;
une plaque de verre transparente; e une plaque de plastique transparente.

4. Système selon la revendication 1, dans lequel ladite image auxiliaire (158, 160, 162, 164) est choisie dans le groupe constitué par:
un menu;
la cabine de pilotage d'un avion; et
des données d'information.

5. Système selon la revendication 1, dans au moins une de ladite image panoramique (150) et de ladite image auxiliaire (158, 160, 162, 164) est choisie dans le groupe constitué par:
un arrêt sur image; et
une vidéo.

6. Système selon la revendication 1, dans lequel chacune desdites images panoramiques est essentiellement homogène.

7. Système selon la revendication 1, dans lequel ladite interface utilisateur (116) est choisie dans le groupe constitué par:
vidéo;
audio; et
tactile.

8. Procédé pour simuler, devant une audience comprenant une pluralité de spectateurs (118A, 118B, 118C, 118D, 118E), une vue depuis la cabine de pilotage d'un avion, la cabine de pilotage comportant un viseur tête haute, le procédé comprenant les étapes de:
fournir une sortie en réponse à une sélection par un utilisateur-opérateur (118F) parmi une pluralité d'options (168, 170, 172) disponibles sur une interface utilisateur (116);
extraire des données d'image panoramique et des données d'image auxiliaire d'une base de données (114), selon ladite sortie;
diriger une pluralité de projecteurs panoramiques (104A, 104B, 104C) pour projeter au moins une respective portion d'une image panoramique (150) sur de respectives sections d'un écran de projection panoramique (102) positionné à une distance d'au moins 10 mètres de l'audience, selon lesdites données d'image panoramique;
diriger un projecteur auxiliaire (110) pour projeter une image auxiliaire (158, 160, 162, 164) vers un combinateur de faisceau unique (106) selon lesdites données d'image auxiliaire, ledit combinateur de faisceau (106) ayant respectivement une longueur et une largeur entre 1 mètre et 3 mètres, ledit combinateur de faisceau (106) étant situé entre ledit écran de projection panoramique concave (102) et ladite audience, ledit combinateur de faisceau (106) étant situé à distance de ladite interface utilisateur (116); et
produire une image combinée de ladite image panoramique (150) et de ladite image auxiliaire (158, 160, 162, 164), destinée à être vue par ladite audience (118A, 118B, 118C, 118D, 118E) à travers ledit combinateur de faisceau (106) depuis les respectives positions desdits spectateurs (118A, 118B, 118C, 118D, 118E), par la transmission d'au moins une partie de ladite image panoramique (150) vers ladite audience (118A, 118B, 118C, 118D, 118E) par ledit combinateur de faisceau (106), et la réflexion de ladite image auxiliaire (158, 160, 162, 164) vers ladite audience (118A, 118B, 118C, 118D, 118E) par ledit combinateur de faisceau (106), de manière que ladite image auxiliaire (158, 160, 162, 164) soit focalisée comme si elle était située sur un plan d'image (120) situé à une distance comprise entre 2 mètres et 4 mètres desdits spectateurs de manière que ladite image auxiliaire (158, 160, 162, 164) paraisse plus proche à ladite audience (118A, 118B, 118C, 118D, 118E) que ladite image panoramique (150), dans lequel ladite image panoramique (150) et ladite image auxiliaire (158, 160, 162, 164) sont projetées en synchronisme de temps-espace.

9. Procédé selon la revendication 8, dans lequel ladite étape de diriger ledit projecteur auxiliaire (10) comprend:
diriger ledit projecteur auxiliaire (110) pour projeter ladite image auxiliaire (158, 160, 162, 164) vers un réflecteur (108) situé au-dessous dudit combinateur de de faisceau (106), et
refléter ladite image auxiliaire (158, 160, 162, 164) par ledit réflecteur (108) vers ledit combinateur de faisceau (106);
dans lequel ledit combinateur de faisceau unique (106) est incliné de 45 degrés dans le sens anti-horaire par rapport à l'axe optique entre ledit combinateur de faisceau (106) et l'audience.
